# EUROPEAN PATENT APPLICATION

(11) **EP 3 858 515 A1**
(43) Date of publication of application: **04.08.2021**
(21) Application number: 20154661.1
(22) Date of filing: 30.01.2020
(51) Int. Cl.: B22F 1/00, B22F 3/00, B22F 3/105, B22F 5/00, B29C 64/165, B33Y 70/10, H01F 1/00, C08K 3/00, H01F 1/08, H01F 41/02

(54) **FILAMENT WITH ORIENTED MAGNETIC PARTICLES FOR 3D PRINTING OF ANISOTROPIC MAGNETS**

(71) Applicant: Jozef Stefan Institute, 1000 Ljubljana (SI)
(72) Inventor: SODERZNIK, Marko, 1000 Ljubljana (SI); KORENT, Matic, 1000 Ljubljana (SI); ROCNIK, Urska, 1000 Ljubljana (SI)
(74) Representative: Mewburn Ellis LLP

(57) **Abstract**

Provided is a filament for 3D printing an anisotropic polymer-bonded magnet comprising a polymer binder and magnetically anisotropic particles that are aligned relative to each other such that the filament is magnetically anisotropic. Also provided is a method for producing such a filament for 3D printing an anisotropic polymer-bonded magnet comprising the steps of (i) mixing magnetic particles with a malleable polymer binder, (ii) exposing the mixture of magnetic particles and malleable polymer binder to a magnetic field, such that the c-axis of each magnetic particle is brought substantially into alignment and (iii) solidifying the polymer binder to form a filament.

## Description

### TECHNICAL FIELD

The present invention relates to the field of additive manufacturing; particularly to filaments with oriented magnetic particles for 3D printing of anisotropic magnets.

### BACKGROUND OF INVENTION

Additive manufacturing (AM) has proven applicable to many fields, including the field of polymer-bonded permanent magnets. 3D printing as the AM method for production of permanent magnets has the advantage of net-shape production (i.e. it is waste-free) because the final shape of the magnet is already predefined. It offers infinite possibilities for producing complex shapes of magnets that cannot be manufactured by other techniques. Based on simulations of different magnet geometries, the desired demagnetization fields are first calculated, and then the magnet is printed using a filament, also called a feedstock. The filament is a starting material that enters the printing process and is extruded in a preconfigured manner to provide a 3D printed polymer-bonded magnet. The key components of the filament and the final polymer boned magnet are (a) polymer binder and (b) magnetic material. The latter consists of particles based on various combinations of elements/alloys, among which the most common are Gd, Ni, Co, Fe, B, and all rare earth elements, including Y. Polymer serves as a bonding material between magnetic particles and is important in defining geometry, and for mechanical stability. The problem with present filaments and, consequently, the corresponding 3D printed polymer-bonded magnets, is that the magnetic material in the filaments is always magnetically isotropic. That means that the particles in the magnets are randomly oriented with respect to their easy magnetization axes (c-axis). If filaments could be produced with oriented magnetic particles, magnetically anisotropic polymer-bonded magnets could be made using 3D printing, but this is presently impossible because there are no such filaments yet.

### TECHNICAL PROBLEM

The technical problem solved by the present application is the production of a filament with preferentially oriented magnetic particles to enable the 3D printing of anisotropic magnets and devices.

### STATE OF THE ART

The 3D printing of polymer-bonded magnets has a relatively young history, as work relating to this field has only been published from 2016 onwards. Additive manufacturing (AM) is a family of several methods that are useful for producing various types of magnets; either metallic or polymer-bonded. The production of polymer-bonded magnets is dominated by so-called "3D printing" technology, also known as Fused Deposition Modelling (FDM) technology or Fused Filament Fabrication (FFF) technology. In the field of FFF/FDM/3D printing so far, only variations in the polymer and printing in predefined magnetic fields generated by permanent magnets or with electromagnets have been investigated. The citations herein relate only to isotropic magnets, which means that their magnetic properties are independent of the direction of measurement. None of these documents describe filaments with oriented magnetic particles for 3D printing of magnetically anisotropic polymer-bonded magnets.

US20180236724A1 relates to a magnetic ink composition for 3D printing a bonded magnet. The magnetic ink composition includes magnetic particles, a polymer binder and a solvent. A 3D printing method for fabrication of a bonded magnet using the magnetic ink composition is also provided. The document describes the possible use of isotropic and anisotropic magnetic particles. Anisotropic magnetic particles can have either or both of magnetocrystalline anisotropy and shape anisotropy. Magnetic particles may include rare earth magnetic particles, ferrite magnetic particles or iron magnetic particles. Although the use of a magnetic field to align the magnetic particles before supplying the magnetic ink composition into the nozzle is briefly mentioned, such alignment is not described in sufficient detail to enable the skilled person to perform it. It focuses on the 3D printing of magnets, where magnets surrounding the nozzle enable particle alignment during 3D printing of a magnet. A special 3D printer It is mentioned that a mold surrounded by an assembly of permanent magnets or electromagnets creates a magnetic field having the desired magnetic field geometry. However, this is not demonstrated to the reader. Furthermore, the document describes the use of ink, which is liquid, and not filament, which has enough structural integrity to be handled and, for example, coiled. Segmented filament fabrication, which involves oriented magnetic particles, is also not described.

WO 2018/152192 A1 describes a method for producing a bonded permanent magnet, comprising a solid precursor material based on a thermoplastic cross-linkable polymer and magnetic particles, which are then put into additive manufacturing device. Crosslinkable polymer has a delayed crosslinking ability. It must be heated to at least, but no more than 10 °C above, its glass transition temperature (Tg). Melt is extruded through the additive manufacturing device and deposited on a substrate as a solid form of the desired shape, exposing the resultant extrudate to a directional magnetic field of sufficient strength to align the magnetic particles. In an effort to increase the magnetic field strength, a higher density of magnetic particles (e. g. at least 80 wt%) may be attempted. It is mentioned that with sufficient magnetic field strength, they are able to align the particles having a hard magnetic composition. However, this document does not describe a filament with aligned magnetic particles or the present method.

US 2018/0215854 A1 relates to a method for producing bonded permanent magnets by additive manufacturing. The method is based on starting material of reactive precursor (amine component and isocyanate) mixed with permanent magnetic composition. Steps of the method include mixing and extruding the cross-linkable reactive precursor material through a nozzle of the additive manufacturing device and deposition of the extrudate onto a substrate under conditions where the extrudate is permitted to cure in order to produce a bonded permanent magnet of desired shape. Polymer bonded magnets were produced from commercially anisotropic magnet powder (Magnequench MQA). Exposing the extrudate to a directional magnetic field of sufficient strength to align the particles having a permanent magnetic composition is contemplated. However, this document does not disclose a filament or method of the present invention.

### BRIEF DESCRIPTION OF THE DRAWINGS

The proposed method is described in the following by way of example, in connection with the accompanying figures.

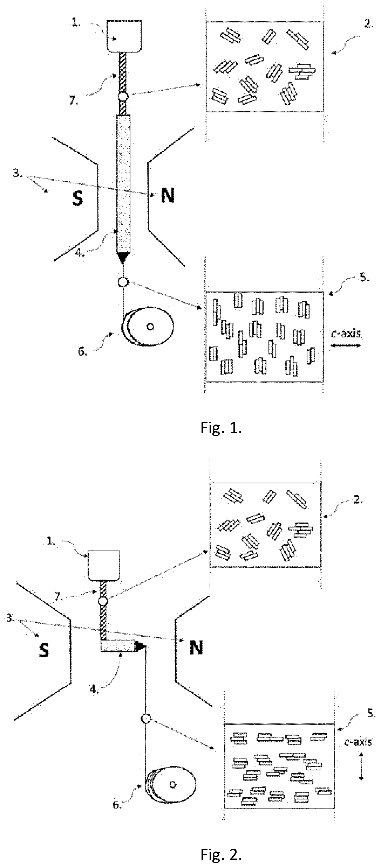

Figs 1 to 6, as described above, show examples of the production of a filament with oriented magnetic particles for 3D printing of permanent magnets. The labels in each figure represent the following:
1. Dosing device of polymer binder with randomly oriented magnetic particles;
2. Randomly oriented magnetic particles in the polymer matrix;
3. Poles of the magnet;
4. Orienting device;
5. Filament with oriented magnetic particles in polymer matrix;
6. Bobbin of the filament with oriented magnetic particles;
7. Filament in which magnetic particles are randomly oriented and mixed together with polymer binder.

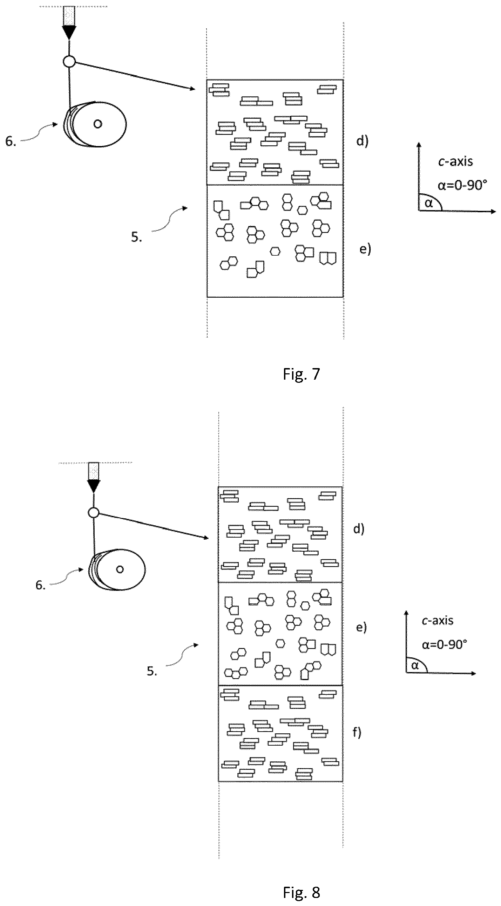

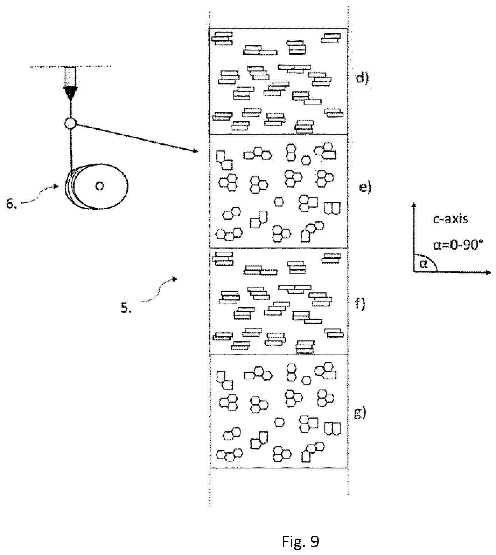

Figs 7 to 9 show each show a filament with segments wherein each segment has a different oriented magnetic particle composition relative to the immediately adjacent segments. The rectangles in (d) and (f) represent oriented magnetic particles of Nd-Fe-B, and (e) and (g) represent a different composition of oriented magnetic particles, such as Sm-Co. The filaments shown are composed of multiple repeated segments through their entire length. Segments do not need to be in the same order or pattern along the length of the filament.

### SUMMARY OF THE INVENTION

The present invention solves the technical problem as stated:
In a **first** aspect there is provided a filament for 3D printing an anisotropic polymer-bonded magnet comprising a polymer binder and magnetically anisotropic particles that are aligned relative to each other such that the filament is magnetically anisotropic. That is to say, the c-axis of each magnetically anisotropic particle in the filament is substantially in alignment with the others. A filament is typically provided having a length such that it can be coiled for storage and uncoiled as it is consumed during use. The length may also be referred to as the long axis. A filament is easily distinguished from a bulk mass by its high length to diameter ratio (i.e. a filament has a much larger length than its diameter). This property allows a filament to be handled easily like an elongate wire and used as a feedstock where a constant and regular input is required over a period of time; such as in 3D printing. The diameter of the filament may be 0.1 mm to 500 mm, such as 0.5 mm to 250 mm or 1 mm to 100 mm. The length of the filament may be at least 1 m, such as 2 m, 5 m, 10 m or 100 m. The length to diameter ratio of the filament may be 1,000,000:1, 500,000:1, 250,000:1 or 100,000:1. Thicker and longer filaments are of course possible and would require correspondingly sized equipment for handling. A 3D printing filament is typically thermally labile such that it can be softened for extrusion in a heated 3D printer head before resolidifying shortly thereafter to retain its position at the printing coordinates.

An advantage of performing anisotropic alignment before 3D printing, rather than after, is that more control can be exerted over the magnetic properties of the 3D printed product during the 3D printing process than performing anisotropic alignment on the finished 3D printed product. This allows for the production of more complex anisotropic permanent magnets.

Another advantage is that the filament of the present invention can be supplied to 3D printer users who do not have the necessary equipment to perform anisotropic alignment after the 3D printing process. Complex anisotropic permanent magnets can therefore be readily produced in remote locations using only a 3D printer because the alignment step is performed when the filament is produced, for example during mass production in a factory.

In some cases, the magnetically anisotropic particles comprise one or more chemical elements having an atomic number of 5 to 70. The chemical elements may be one or more of B, Fe, Nd, Sm, Co and may be provided in their elemental form and/or as compounds.

In some instances, the magnetically anisotropic particles comprise of Nd-Fe-B and/or Sm-Co and/or ferrite particles. More specifically, the magnetically anisotropic particles may comprise of one or more of (i) Nd-Fe-B particles, (ii) Nd-Fe-B with Sm-Co particles or (iii) Nd-Fe-B with Sm-Co and with ferrite particles.

In some cases, the polymer binder is a thermoplastic, thermoset or biopolymer. The polymer binder may be polylactic acid (PLA).

In some instances, the volume ratio of magnetically anisotropic particles to polymer is 99:0.1 to 0.1:99, 99:1 to 1:99, 10:1 to 1:10 or 9:1 to 1:9. It is generally preferred to have a higher volume of magnetic particles than polymer.

In some cases, all the magnetically anisotropic particles are aligned in substantially the same direction. The direction may be perpendicular, parallel or at a certain predefined angle relative to the long axis of the filament. Substantially all the magnetically anisotropic particles may be aligned along substantially the entire length of the filament.

In some instances, the filament comprises a plurality of segments along its length wherein each segment comprises a different magnetic particle composition relative to the immediately adjacent segments; and at least one of the segments comprises the magnetically anisotropic particles. None, some or all of the other segments may comprise the or different magnetically anisotropic particles. None, some or all of the other segments may comprise magnetically isotropic particles. It may also be that none, some or all of the other segments do not contain magnetic particles. The segments may also vary in parameters such as magnetic particle concentration, alignment and/or distribution. Alternatively, it may be that the filament is not segmented. That is to say, the filament may have a substantially uniform composition and substantially uniform orientation of the magnetically anisotropic particles along its entire length.

An advantage is that this approach enables the fabrication of multicomponent magnets which are desirable because they can withstand higher demagnetization fields during operation.

In a **second** aspect there is provided a method for producing a filament for 3D printing an anisotropic polymer-bonded magnet comprising the steps of; (i) mixing magnetic particles with a malleable polymer binder; (ii) exposing the mixture of magnetic particles and malleable polymer binder to a magnetic field, such that the c-axis of each magnetic particle is brought substantially into alignment; and (iii) solidifying the polymer binder to form a filament. The magnetic particles used in step (i) may be anisotropic. The polymer binder in step (i) is malleable such that it can mix with the magnetic particles. If necessary, the polymer binder may be thermally, chemically or photoreactively softened prior to mixing with the magnetic particles. The polymer binder may be a polymeric material or a polymer precursor (e.g. a monomer or mixture of monomers) that can cure into a polymeric material. In the solidification step, the polymer binder may be allowed to solidify or cure thermally (e.g. by heating or cooling), chemically or photoreactively to form a solid filament. The magnetically anisotropic filament may then be coiled or wound up for storage until it is required. Alternatively, the filament may be used directly in a 3D printing process, for example where a 3D printer is provided directly downstream of the filament manufacturing. The step of providing the isotropic magnetic particles may comprise a pressing step which may, optionally, be performed at elevated temperature (a "hot-pressing" step).

In some cases, the magnetic particles used in step (i) of the method are anisotropic magnetic particles provided by (a) providing an isotropic magnet; (b) deforming the isotropic magnet to form an anisotropic magnet; (c) crushing and milling the anisotropic magnet to provide anisotropic magnetic particles. The deformation step may be performed under heat. The pressure may be set from 0.05 MPa up to 1000 MPa and the temperature is set from -200°C to 1500°C during the pressing step and/or the deforming step. The pressing step and/or the deforming step may be performed using a spark plasma sintering (SPS) device. Other suitable heating devices may be used. During the pressing step, the magnetic particles may be pressed and heat-treated in a mould with cylindrical geometry, square geometry or any other suitable predetermined geometry. The diameter and height of a mould use in the pressing step may be each independently be between from 0.1 mm and to 500 mm. The pressing step and/or the deforming step may be performed under an atmosphere of oxygen-containing gas or/and protective atmosphere based on nitrogen or/and Noble gasses or/and other gasses or/and vacuum with the pressure range between 10³ mbar and 10⁻⁹ mbar; and the holding time at the desired temperature is up to 360000 s. The crushing and milling step may be performed using a planetary ball-mill or attritor-mill or jet-mill, thus obtaining particles with each having a diameter between in the range of from 0.03 µm to 3000 µm form and each particle being composed of 1 to 10000 grains. The duration of this step may be from 0.01 s to 36000 s.

In some instances, the isotropic magnetic particles comprise one or more chemical elements having an atomic number of 5 to 70. The isotropic magnetic particles may comprise Nd-Fe-B and/or Sm-Co and/or ferrite particles. More specifically, the isotropic magnetic particles may comprise of one or more of (i) Nd-Fe-B particles, (ii) Nd-Fe-B with Sm-Co particles or (iii) Nd-Fe-B with Sm-Co and with ferrite particles. The isotropic magnetic particles may be Nd-Fe-B ribbons.

In some cases, the mixture in the mixing step is softened under the applied magnetic field. The mixture may be thermally, chemically or photoreactively softened. For example, it may be softened by heat and/or UV light.

In some instances, an electromagnet with an external magnetic field of 1 mT to 40 T is used to orient the magnetic particles in the step of exposing the magnet particles to a magnetic field. The magnetic particles may thereby be aligned parallel, perpendicular or at 1° to 89° with respect to the long axis of the filament. The best magnetic alignment results are often achieved using electromagnets.

In some cases, a single permanent magnet with a remanence of between 0.1 to 2 T is used to orient the magnetic particles parallel to the filament long axis in the step of exposing the magnet particles to a magnetic field.

In some instances, a stack of two or more permanent ring magnets or a cylindrical Halbach array is used to generate a permanent magnetic field in the step of exposing the magnet particles to a magnetic field.

In some cases, the filament is formed having a plurality of segments along its length wherein; each segment comprises a different magnetic particle composition relative to the immediately adjacent segments; and at least one of the segment comprises magnetically anisotropic particles. This is achieved by varying the use of magnetic particles and application of the permanent magnetic field as lengths of the filament are formed.

### DETAILED DESCRIPTION

In one embodiment, rapidly quenched commercial Nd-Fe-B ribbons with/without heavy rare earth elements are initially hot-pressed using spark plasma sintering (SPS) device, also known as PECS (Pulsed Electric Current Sintering). This is done by pressing and heat-treating the ribbons in mould with cylindrical geometry (but a square or arbitrary geometry is also possible). The diameter and height of mould is preferably from 0.1 mm to 500 mm, the pressure is preferably from 0.05 MPa up to 1000 MPa (typically about 50 MPa) and the temperature is preferably set from -200°C to 1500°C (typically about 650°C). The atmosphere in the chamber may be oxygen-containing gas or/and protective atmosphere based on nitrogen or/and Noble gasses or/and other gasses or/and vacuum. When using vacuum system, the pressure range is preferably 10³ mbar - 10⁻⁹ mbar (typically about 10⁻³-10⁻⁴ mbar). The holding time at desired temperature is preferably from 0 s and 360000 s (typically about 60 s). After achieving partially dense or fully dense cylindrical sample made of isotropic Nd-Fe-B ribbons, a hot-deformation process may be used to form anisotropic Nd-Fe-B magnets.

In the hot-deformation process a spark plasma sintering (SPS) device may be used. A mould with a larger diameter may be advantageously chosen in order to allow the plastic deformation of the isotropic hot-pressed Nd-Fe-B magnet. Regarding the empty space, which defines the final diameter of the hot-deformed magnet, the deformation ratio can be chosen from 0.1 % to 99 %, such as 50 to 90% or 60 to 80% (usually above about 70 %). The remanence (*B*ᵣ) and maximum magnetic energy product ((*BH*)ₘₐₓ) are enhanced gradually with the deformation ratio typically increasing from 0 % to more than 99 % whereas the coercivity (*H*_{Cj}) is decreased. To allow the plastic deformation and consequently the preferential grain-growth perpendicular to the easy magnetization axis (c-axis), the temperature is preferably set between -200°C to 1500°C, such as -100°C to 500°C or -0°C to 200°C (typically up to about 100°C above pressing temperature), and the pressure is preferably set to 0.05 MPa to 1000 MPa, such as 100 MPa to 500 mPa or 200 mPa to 400 mPa. A preferable pressure is about 150 MPa. The thermal/pressure experiments are preferably carried out in vacuum atmosphere. However, oxygen-containing gasses, Nitrogen-based gasses, Noble gasses or other inert gasses may be used as an alternative.

After fully dense anisotropic hot-deformed Nd-Fe-B magnet is made, such as by SPS, the magnet is crushed and milled in a planetary ball mill, preferably for 0.01 s to 36000 s, such as 10 s to 300 s or 30 s to 120 s. A preferable amount of time is about 60 s.

The size of each particle may vary between 0.03 µm to 3,000 µm, such as 10 µm to 2,000 µm or 500 µm to 1,000 µm. Each particle is composed of numerous grains where number of grains is preferably 1 to 10000, such as 100 to 5,000 or 500 to 2,500. The milling process is preferably carried out in non-oxidative gasses, such as nitrogen-based gasses, Noble gasses or other inert gasses.

It is also possible to use magnetic particles of any permanent magnet, either magnetically isotropic or/and magnetically anisotropic, to form magnetically anisotropic particles for filament fabrication.

A filament with oriented magnetic particles for 3D printing is made of milled magnetically anisotropic Nd-Fe-B particles and a polymer binder. The polymer binder is a thermoplastic, thermoset or biopolymer (such as PLA). The volume ratio of magnetically anisotropic particles:polymer binder is preferably between 0.01-99, depending on the desired remanence. Polymer binder and magnetic particles are mixed in a mixing device which is placed after a dosing device. At these stages, the magnetic particles are magnetically randomly oriented. A downstream orienting device, such as an extruder or a simple tube, is placed directly into an applied magnetic field in which the magnetic particles are then oriented as shown, for example, in Fig. 1- Fig. 6. Once the mixture of polymer binder and magnetic particles solidifies under the magnetic field, a filament with oriented magnetic particles is formed. To make a longer filament, the method is repeated and/or larger equipment is used

Fig. 1 - Fig. 6 show various options for exposing a mixture of polymer binder and magnetically anisotropic Nd-Fe-B particles to a permanent magnetic field. In the region of magnetic field south-north (S-N), the magnetically anisotropic Nd-Fe-B particles orient in a way that magnetic field is aligned with the c-axis of magnetic particles, which is schematically illustrated in documented figures. Solidification occurs in vicinity of dotted rectangle, which represents an orienting device, allowing the polymer binder to soften and enable magnetic particles to physically move and orient along the c-axis; heat, UV source, etc. or a hollow tube into which liquid pre-polymer binder is inserted together with the magnetic particles. Nd-Fe-B particles can be oriented in a different way with respect to the long axis of filament depending on the positioning of the orienting device (perpendicular, parallel another specific angle). The results of such a process are a filament with oriented magnetic particles for 3D printing of anisotropic polymer-bonded magnets.

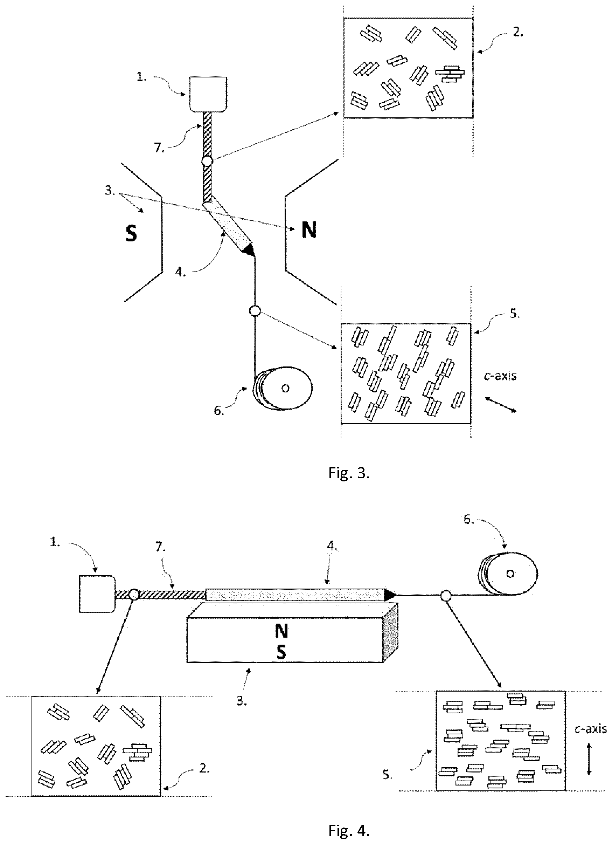

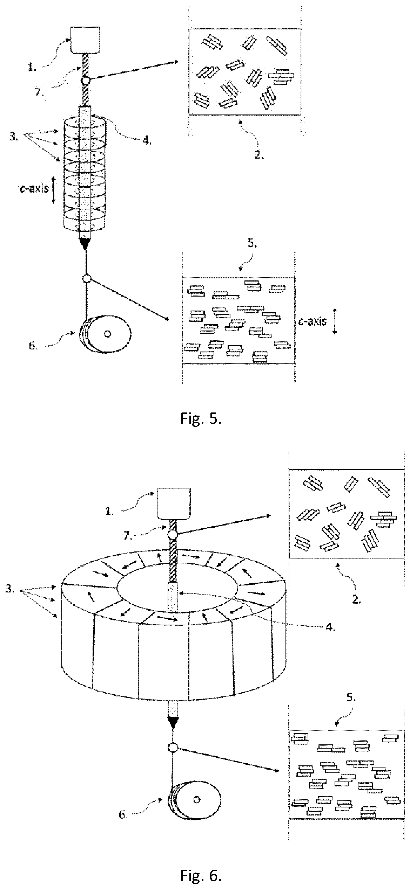

Fig. 1 shows a set-up in which electromagnet is used to maintain the magnetic field in S-N direction where the orienting device is positioned. The result of the process is a filament with a parallel configuration of orientation. In a second case, shown in Fig. 2, perpendicular configuration of the filament is maintained during solidification in the orienting device which is tilted 90° relative to its position in Fig. 1. The result is a filament with perpendicular configuration. Fig 3. shows Nd-Fe-B magnetic particles that are not parallel nor perpendicular, but rather tilted between 1°- 89° regards to the long filament axis. An electromagnet can generate an external magnetic field of 1 mT to 40 T. A permanent magnetic field can also be provided by a single permanent magnet with a remanence of 0.1 to 2 T in various shapes. The result of this process, shown in Fig. 4, is a filament with parallel configuration. An alternative magnetic field generator is stack of a plurality of permanent ring magnets as shown in Fig. 5. In addition, a cylindrical Halbach array may be used to provide stronger magnetic field than a single permanent magnet, as shown in Fig. 6.

It is not necessary that the filament of the invention is used to 3D print an anisotropic polymer-bonded magnet immediately. The filament can be stored and later used for 3D printing of anisotropic polymer-bonded magnets. This enables the separation of both processes in Fused Deposition Modelling - preparation of the filament and 3D printing an anisotropic polymer-bonded magnet.

### EXAMPLES

### Example 1

Rapidly quenched commercial Nd-Fe-B ribbons (3 g) without heavy rare earth elements were hot-pressed in a mould with cylindrical geometry using spark plasma sintering (SPS) device. The diameter of mould was 10 mm, the axial pressure was 50 MPa, the temperature was set to 650°C and the heating rate was 100°C/min. Vacuum in the chamber was 10⁻³ mbar. The holding time at desired temperature was 60 s. After forming a fully dense cylindrical sample from the isotropic Nd-Fe-B ribbons, anisotropic Nd-Fe-B magnets were formed using the spark plasma sintering (SPS). The diameter of the mould was 20 mm, the pressure was 150 MPa, the temperature was 670°C, the heating rate was 75°C/min and the holding time was 60 s. Vacuum in the chamber was 10⁻³ mbar. Regarding the empty space, which defines the final diameter of the hot-deformed magnet, the deformation ratio was 75 %.

In order to determine the magnetically isotropic nature of hot-pressed Nd-Fe-B magnet, the magnetic properties were measured by permeameter in 2 different directions; along the pressing direction and perpendicular to the pressing direction. Since the remanence was the same, measured in both directions, this confirms the isotropic nature of the microstructure.

After the fully dense anisotropic hot-deformed Nd-Fe-B magnet was made by SPS, the magnet was crushed and milled in a planetary ball mill for 60 s. The particle size of each particle varied from 3 µm to 100 µm. Each particle is composed of numerous plate-like grains wherein the number of grains in each particle is 10 to 300. The milling process was carried out in an inert argon atmosphere to avoid oxidation.

A filament with oriented magnetic particles for 3D printing was then made by mixing the milled magnetically anisotropic Nd-Fe-B particles and a polymer binder. The polymer binder was based on acrylic acid. The volume ratio of magnetically anisotropic particles/polymer binder was 0.15. The magnetically anisotropic particles were mixed with polymer binder and put in a plastic tube, which was then placed in the region with defined magnetic field.

This example corresponds to the parallel configuration shown in Fig. 1. In the region of magnetic field south-north (S-N), the magnetically anisotropic Nd-Fe-B particles oriented in a way that the magnetic field aligned with the c-axis of magnetic particles. Solidification occurred in the vicinity of the dotted rectangle which represents a hollow tube into which the liquid polymer binder was inserted together with the magnetic particles. An external magnetic field of electromagnets was set to 1.8 T to align the magnetic particles. The Nd-Fe-B particles were oriented perpendicular to the filament long axis. This resulted in a filament with oriented magnetic particles for 3D printing of anisotropic polymer-bonded magnets. Magnetic properties, particularly remanence, were measured using vibrating sample magnetometer (VSM) in two different directions regarding magnetic particle alignment. The filament was confirmed as an anisotropic filament because it demonstrated different values for remanence in different directions. Parallel to the alignment (along the easy magnetization axis; c-axis), the remanence was 0.14 T, while perpendicular measurement gave 0.03 T (perpendicular to the c-axis).

### Example 2

The same method was performed as in Example 1 except that rapidly quenched commercial Nd-Fe-B ribbons (3 g) (MQUF) without heavy rare earth elements were used. The volume ratio of magnetically anisotropic particles/polymer binder was 0.13. The perpendicular configuration shown in Fig. 4 was used.

The Nd-Fe-B particles were oriented perpendicular to the long filament axis using a permanent magnet having a remanence of 1.4 T. This resulted in a filament with oriented magnetic particles for 3D printing of anisotropic polymer-bonded magnets. Magnetic properties, particularly remanence, was measured using vibrating sample magnetometer (VSM) in two different directions regarding magnetic particle alignment. The filament was confirmed as an anisotropic filament because it demonstrated different values for remanence in different directions. Parallel to the alignment (along the easy magnetization axis; c-axis), the remanence was 0.13 T, while perpendicular measurement gave 0.03 T (perpendicular to the c-axis).

## Claims

1. A filament for 3D printing an anisotropic polymer-bonded magnet comprising:
a polymer binder; and
magnetically anisotropic particles that are aligned relative to each other such that the filament is magnetically anisotropic.

2. A filament according to claim 1, wherein the magnetically anisotropic particles comprise one or more chemical elements having an atomic number of 5 to 70.

3. The filament of any one of the preceding claims, wherein the magnetically anisotropic particles comprise Nd-Fe-B and/or Sm-Co and/or ferrite particles.

4. The filament of any one of the preceding claims, wherein the polymer binder is a thermoplastic, thermoset or biopolymer.

5. The filament of any one of the preceding claims, wherein the volume ratio of magnetically anisotropic particles to polymer is 99:0.1 to 0.1:99.

6. The filament of any one of the preceding claims, wherein all the magnetically anisotropic particles are aligned in substantially the same direction.

7. The filament of any one of the preceding claims, wherein the filament comprises a plurality of segments along its length wherein;
each segment comprises a different magnetic particle composition relative to the immediately adjacent segments; and
at least one of the segments comprises the magnetically anisotropic particles.

8. A method for producing a filament for 3D printing an anisotropic polymer-bonded magnet comprising the steps of:
(i) mixing magnetic particles with a malleable polymer binder;
(ii) exposing the mixture of magnetic particles and malleable polymer binder to a magnetic field, such that the c-axis of each magnetic particle is brought substantially into alignment; and
(iii) solidifying the polymer binder to form a filament.

9. The method of claim 8, wherein the magnetic particles used in step (i) are anisotropic magnetic particles provided by;
(a) providing an isotropic magnet;
(b) deforming the isotropic magnet to form an anisotropic magnet; and
(c) crushing and milling the anisotropic magnet to provide anisotropic magnetic particles.

10. The method of claim 9, wherein the isotropic magnetic particles comprise one or more chemical elements having an atomic number of 5 to 70.

11. The method of any one of claims 8 to 10 wherein the mixture in the mixing step is softened under the applied magnetic field.

12. The method of any one of claims 8 to 11 wherein an electromagnet with an external magnetic field of 1 mT -40 T is used to orient the magnetic particles in the step of exposing the magnet particles to a magnetic field.

13. The method of any one of claims 8 to 11 wherein a single permanent magnet with a remanence of 0.1 -2 T is used to orient the magnetic particles parallel to the filament long axis in the step of exposing the magnet particles to a magnetic field.

14. The method of any one of claims 8 to 11 wherein a stack of two or more permanent ring magnets or a cylindrical Halbach array is used to generate a permanent magnetic field in the step of exposing the magnet particles to a magnetic field.

15. The method of any one of claims 8 to 14 wherein the filament is formed having a plurality of segments along its length wherein;
each segment comprises a different magnetic particle composition relative to the immediately adjacent segments; and
at least one of the segments comprises magnetically anisotropic particles.
